# EUROPÄISCHE PATENTSCHRIFT

(11) **EP 0 949 998 B1**
(45) Veröffentlichungstag und Bekanntmachung des Hinweises auf die Patenterteilung: **08.08.2001**
(21) Anmeldenummer: 98904029.0
(22) Anmeldetag: 02.01.1998
(51) Int. Cl.: B60C 11/12

(54) **LAUFFLÄCHENPROFIL FÜR EINEN FAHRZEUGREIFEN**
TREAD PROFILE FOR VEHICLE TYRES
PROFIL DE LA BANDE DE ROULEMENT DU PNEU D'UN VEHICULE

(30) Priorität: 03.01.1997 DE 19700101
(43) Veröffentlichungstag der Anmeldung: 20.10.1999
(73) Patentinhaber: Pirelli Reifenwerke GmbH, 64747 Breuberg (DE)
(72) Erfinder: ADLON, Ralph, D-64853 Otzberg (DE); FARRENKOPF, Elmar, D-63853 Mömlingen (DE); KÜSTER, Stefan, D-64823 Gross-Umstadt (DE); SALLEIN, Otto, D-64747 Breuberg (DE); STROTHJOHANN, Thomas, D-64747 Breuberg (DE)
(74) Vertreter: Preissner, Nicolaus, Dipl.-Ing.
(86) Internationale Anmeldenummer: EP9800011
(87) Internationale Veröffentlichungsnummer: WO9829268

(56) Entgegenhaltungen:
- EP-A- 0 747 242
- GB-A- 2 253 816
- GB-A- 2 253 817
- US-A- 2 850 066
- US-A- 2 907 365
- US-A- 4 364 426
- US-A- 5 307 851

## Beschreibung

Die Erfindung betrifft ein Laufflächenprofil für einen Fahrzeugreifen mit mindestens einer umlaufenden Längsrille und von der Längsrille ausgehenden Querrillen zur Abgrenzung von Profilblöcken und mit in der Lauffläche angeordneten Lamellen, die sich in ihrer Tiefenausdehnung von der Profiloberfläche in Richtung des Profilgrunds erstrecken, wobei mindestens eine der Lamellen, die in wenigstens einem der Profilblöcke angeordnet ist, V-förmig ausgebildet ist.

Ein derartiges Laufflächenprofil ist aus der EP-A-0 747 242 bekannt. Die Profilblöcke werden hierbei in ihrer Mitte in eine größere Anzahl von Profilteilen als am Rand unterteilt. Die Lamellen sind von der Seitenfläche der Profilblöcke beabstandet.

Gemäß der US-A-2 907 365 werden in einem Laufstreifen für ein Laufflächenprofil im wesentlichen rechteckige Ausnehmungen gebildet, die anschließend vorvulkanisiert werden. Danach wird der Laufstreifen auf eine Reifenkarkasse aufgebracht und nochmals vulkanisiert. Aufgrund elastischer Rückstellkräfte im Laufstreifen schließen sich die rechteckförmigen Ausnehmungen, so daß ihre Seitenwände aneinander anliegen. Die rechteckigen Ausnehmungen stehen nicht mit einer Seitenfläche des Profilblocks in Verbindung.

Bei einer derartigen Profilgestaltung sind die Längsrillen maßgebend für die Seitenstabilität und für die Vermeidung von Aquaplaning eines solchen Reifens. Die Querrillen haben die Aufgabe, Antriebs-, Kurven- und Bremskräfte besser zu übertragen, wobei die Querrillen senkrecht oder schräg geneigt zur umlaufenden Längsrille verlaufen können. Die zusätzlich in der Lauffläche des Laufflächenprofils vorgesehenen Lamellen sind erforderlich, um die Anzahl der Greifkanten zu erhöhen und damit durch Formschluß die Traktions- und Bremseigenschaften zu verbessern.

Die Verwendung herkömmlicher Lamellen in der Lauffläche des Laufflächenprofils eines Reifens weist jedoch eine Reihe von Nachteilen auf. So führen die als schmale Einschnitte in den Profilblöcken des Laufflächenprofils ausgebildeten Lamellen zu einer Verringerung der Steifigkeit der einzelnen Profilblöcke. Dadurch ergibt sich eine höhere Beweglichkeit der einzelnen Profilblöcke, was mit Nachteilen bei der Handhabung und Fahrstabilität des Reifens, insbesondere bei Trockenheit, Nässe und auch bei Schnee einhergeht. Zur Vermeidung derartiger Nachteile ist es bisher erforderlich, einer zu geringen Steifigkeit der Profilblöcke durch eine gezielte Abstimmung der Anzahl, Anordnung und Tiefe der Lamellen entgegenzuwirken. Diese Abstimmung ist jedoch schwierig und aufwendig und führt zu komplizierten Laufflächenprofilen. Daraus ergeben sich nicht zuletzt erhöhte Kosten bei der Herstellung der Reifen.

Der vorliegenden Erfindung liegt daher die Aufgabe zugrunde, ein Laufflächenprofil für Fahrzeugreifen der genannten Art derart weiterzubilden, daß die im Stand der Technik genannten Nachteile vermieden werden. Insbesondere soll ein Laufflächenprofil für einen Fahrzeugreifen geschaffen werden, bei dem trotz der Verwendung von Lamellen eine ausreichend hohe Steifigkeit der einzelnen Profilblöcke gewährleistet ist.

Zur Lösung dieser Aufgabe ist bei einem Laufflächenprofil der eingangs genannten Art erfindungsgemäß vorgesehen, daß die Schnittkante der Schenkel mindestens einer der V-förmigen Lamellen mit der Seitenfläche des Profilblocks zusammenfällt.

Durch diese Ausgestaltung der Lamellen wird ein Laufflächenprofil geschaffen, das besonders gute Traktions- und Bremseigenschaften aufweist und das außerdem eine ausreichende Steifigkeit der einzelnen Profilblöcke bei Belastung durch Querkräfte gewährleistet, so daß die im Stand der Technik beschriebenen Nachteile bei der Handhabung und Fahrstabilität des Reifens vermieden werden. Durch die erfindungsgemäße Ausgestaltung der Lamellen wird erreicht, daß sich die Lamellen bei Beanspruchung durch Längskräfte, wie sie beispielsweise bei Traktion oder dem Bremsen auftreten, wie üblich öffnen können, wodurch die Anzahl der Greifkanten erhöht wird. Bei der Belastung durch Querkräfte, die beispielsweise bei Kurvenfahrten auftreten, schließen sich die Lamellen und bewirken dadurch eine Versteifung des Profilblocks. Die Versteifung resultiert aus der Tatsache, daß sich durch die V-förmige Ausgestaltung der Lamellen die einzelnen keilförmigen Teile des Profilblocks, die durch die V-förmigen Lamellen voneinander getrennt sind, gegeneinander abstützen können. Ein Abgleiten der einzelnen Profilblockteile gegeneinander, wie dies beispielsweise bei herkömmlichen linienartig ausgebildeten Lamellen möglich war, wird durch die erfindungsgemäße Ausgestaltung der Lamellen unterbunden. Dadurch werden insbesondere beim Auftreten von Querkräften ausreichend steife Profilblöcke geschaffen, was beispielsweise in einer Verbesserung der Fahrstabilität, beispielsweise bei Trockenheit, Nässe oder auch bei Schnee resultiert.

Bei dem erfindungsgemäßen Laufflächenprofil ist vorgesehen, daß wenigstens eine der Lamellen V-förmig ausgebildet ist. Es ist jedoch auch möglich, mehrere V-förmige Lamellen pro Profilblock vorzusehen. Vorteilhaft ist bei unterschiedlicher Länge der Profilblöcke eine unterschiedliche Anzahl von V-förmigen Lamellen in jedem der Profilblöcke vorgesehen.

In vorteilhafter Ausgestaltung der Erfindung weisen die Schenkel der V-förmigen Lamelle die gleiche Länge auf.

Gemäß einer weiteren Ausführungsform der Erfindung steht die Schnittkante der Schenkel von wenigstens einer anderen V-förmigen Lamelle über einen Lamellensteg mit der Seitenfläche des Profilblocks in Verbindung. Je nach Anforderung an das Laufflächenprofil können die einzelnen Anordnungsvarianten der V-förmigen Lamellen in dem Profilblock oder den Profilblöcken auch kombiniert werden.

In dem Fall, daß die V-förmige Lamelle über einen Lamellensteg mit der Seitenfläche des Profilblocks in Verbindung steht, kann vorteilhaft vorgesehen sein, daß die Seitenfläche des Profilblocks im Verbindungsbereich mit dem Lamellensteg eine Einkerbung aufweist.

Vorteilhaft liegt die Tiefe der Lamelle zwischen ¼ und der gesamten Tiefe des Profilblocks.

In vorteilhafter Ausgestaltung der Erfindung ist der mindestens eine Profilblock, der die wenigstens eine V-förmige Lamelle aufweist, an der Außenschulter und/oder der innenschulter des Laufflächenprofils ausgebildet. Gemäß einer weiteren Ausführungsform der vorliegenden Erfindung sind mehrere Profilblöcke vorgesehen, die jeweils wenigstens eine V-förmige Lamelle aufweisen. Diese Profilblöcke sind erfindungsgemäß über der gesamten Fläche des Laufflächenprofils verteilt angeordnet. Dabei kann diese Anordnung in einem festgelegten Muster oder regellos erfolgen.

In weiterer Ausgestaltung der Erfindung sind die freien Enden der Schenkel der wenigstens einen V-förmigen Lamelle zur Mittellinie des Laufflächenprofils hin ausgerichtet.

Gemäß einer weiteren Ausführungsform der Erfindung ist die Schnittkante der Schenkel der wenigstens einen V-förmigen Lamelle zur Mittellinie des Laufflächenprofils hin ausgerichtet. Es ist jedoch auch denkbar, ein Laufflächenprofil zu schaffen, in dem Lamellen mit den beiden vorstehend genannten Ausrichtungen vorgesehen sind.

In weiterer Ausgestaltung der Erfindung können mehrere Profilblöcke vorgesehen sein, die jeweils wenigstens eine V-förmige Lamelle aufweisen, wobei die freien Enden der Schenkel und die Schnittkanten der Schenkel einzelner V-förmiger Lamellen zur Mittellinie des Laufflächenprofils hin ausgerichtet sind. Weiterhin kann die Ausrichtung der V-förmigen Lamellen benachbarter und/oder gegenüberliegender Profilblöcke gleichsinnig und/oder entgegengesetzt und/oder alternierend sein.

Durch die in den Profilblöcken angeordneten erfindungsgemäßen V-förmigen Lamellen wird ein Laufflächenprofil geschaffen, das auf einfache und kostengünstige Weise herstellbar ist, und das sowohl bei der Beanspruchung durch Längskräfte als auch bei Belastung durch Querkräfte eine sichere Handhabung und Fahrstabilität des Reifens gewährleistet. Dabei kann durch die Verwendung einer oder mehrere V-förmiger Lamellen pro Profilblock, der speziellen Anordnung der V-förmigen Lamellen innerhalb des Profilblocks, der Ausrichtung der Lamellen innerhalb des Profilblocks, der Variation der Länge der Schenkel der V-förmigen Lamellen sowie der Anordnung der mit den erfindungsgemäßen V-förmigen Lamellen versehenen Profilblöcke innerhalb des Laufflächenprofils den unterschiedlichsten Anforderungen an den Reifen Rechnung getragen werden. Deshalb kann das erfindungsgemäße Laufflächenprofil sowohl bei Trockenheit, als auch bei Nässe, als auch bei Schnee eingesetzt werden.

Vorteilhaft findet das erfindungsgemäße Laufflächenprofil bei einem Winterreifen Verwendung. Es ist jedoch auch möglich, das erfindungsgemäße Laufflächenprofil für Sommer- und Ganzjahresreifen einzusetzen.

Anhand einer schematischen Zeichnung sind Aufbau und Funktionsweise von Ausführungsbeispielen des erfindungsgemäßen Laufflächenprofils näher erläutert. Dabei zeigen:
- Figur 1: eine Draufsicht auf einen Ausschnitt eines erfindungsgemäßen Laufflächenprofils;
- Figur 2: eine schematische Ansicht eines nicht erfindungsgemäßen Profilblocks, in dem eine V-förmige Lamelle ausgebildet ist, bei der die Schnittkante der Schenkel nicht mit der Seiten Fläche des Profilblocks zusammenfällt; und die
- Figuren 3a bis 3f: verschiedene schematische Anordnungsvarianten von Profilblöcken mit V-förmigen Lamellen auf dem Laufflächenprofil.

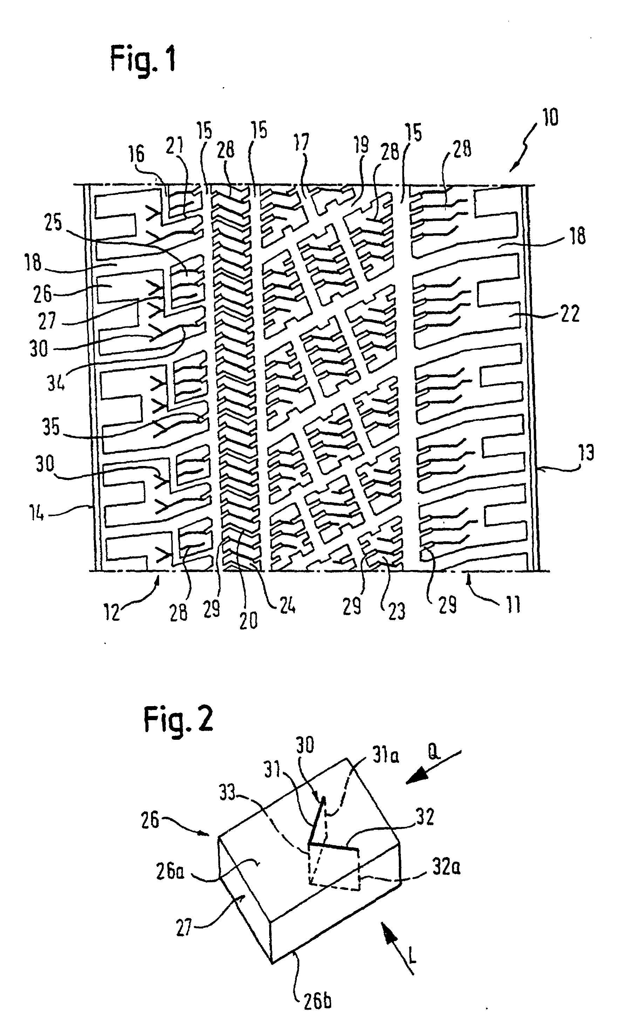

Figur 1 zeigt eine Draufsicht auf ein Laufflächenprofil 10 mit umlaufenden Längsrillen 15, 16. Weiterhin ist eine Längsrille 17 vorgesehen, die leicht schräg zur Umlaufrichtung des Laufflächenprofils 10 verläuft. Die Längsrille 16 erstreckt sich nicht durchgängig über das Laufflächenprofil 10, sondern ist durch Teile von Profilblöcken 26 unterbrochen.

Die einzelnen Längsrillen 15, 16, 17 sind unterbrochen von Querrillen 18, 19, 20, 21. Diese Querrillen sind entweder senkrecht oder leicht schräg geneigt zu den Längsrillen 15, 16, 17 ausgerichtet. Die Längsrillen 15, 16, 17 und die Querrillen 18, 19, 20, 21 begrenzen Profilblökke 22, 23, 24, 25, 26. Dabei sind auf der Innenschulter 11 und der Außenschulter 12 des Laufflächenprofils 10 jeweils größere Profilblökke 22, 26 ausgebildet, während im Mittelbereich des Laufflächenprofils 10 kleinere Profilblöcke 23, 24 ausgebildet sind. Die Profilblöcke 25, die ebenfalls im Bereich der Außenschulter 12 angeordnet sind, korrespondieren zu den Profilblöcken 26.

Weiterhin weisen die Profilblöcke 22, 23, 24, 25, 26 Lamellen 28, 30 auf, die als Einschnitte ausgebildet sind. Die Lamellen erstrecken sich quer oder schräg geneigt zur Umlaufrichtung des Laufflächenprofils 10. Dabei weisen die Profilblöcke im Bereich der Lamellen Einkerbungen 29, 35 auf.

Das Laufflächenprofil 10 ist in seiner Breitenausdehnung begrenzt durch eine Innenkante 13 und eine Außenkante 14, die gleichzeitig auch den äußeren Abschluß der Innenschulter 11 und der Außenschulter 12 bilden.

Wie sich weiterhin aus Figur 1 ergibt, weisen die Profilblöcke 26 V-förmige Lamellen 30 auf. Im vorliegenden Ausführungsbeispiel sind die Profilblöcke 26 in der Außenschulter 12 des Laufflächenprofils 10 angeordnet. Die Profilblöcke 26 weisen eine im wesentlichen H-förmige Form auf. An ihrer Außenseite werden sie durch die Außenkante 14 des Laufflächenprofils 10 begrenzt. Weitere Begrenzungen der Profilblöcke 26 bilden die Querrillen 18 und 21 sowie die Längsrillen 15 und 16. Die Profilblöcke 26 weisen unterschiedliche Breite auf. Die schmaleren Profilblöcke 26 sind mit jeweils zwei V-förmigen Lamellen 30 versehen, während die breiteren Profilblöcke 26 mit drei V-förmigen Lamellen 30 versehen sind. Die freien Enden (siehe Figur 2) der V-förmgen Lamellen 30 sind zur Außenkante 14 hin ausgerichtet.

In dem Ausführungsbeispiel gemäß Figur 1 sind zwei Anordnungsvarianten der V-förmigen Lamellen 30 dargestellt. Diejenigen V-förmigen Lamellen 30, die im Schenkel des H-förmig ausgebildeten Profilblocks 26 angeordnet sind, stehen über einen Lamellensteg 34 mit der Seitenfläche 27 des Profilblocks 26 in Verbindung. Zusätzlich weist die Seitenfläche 27 des Profilblocks 26 im Verbindungsbereich mit dem Lamellensteg 34 eine Einkerbung 35 auf. Die im Sattel des H-förmig ausgebildeten Profilblocks 26 angeordneten V-förmigen Lamellen 30 sind derart angeordnet, daß die Schnittkante 33 der Schenkel 31, 32 (siehe Figur 2) von der V-förmigen Lamelle 30 mit der Seitenfläche 27 des Profilblocks 26 zusammenfällt.

Figur 2 zeigt beispielhaft einen stark vereinfachten Profilblock 26, in dem eine V-förmige Lamelle 30 ausgebildet ist. Die V-förmige Lamelle 30 steht in diesem Fall mit der Seitenfläche 27 des Profilblocks 26 nicht in Verbindung. Die V-förmige Lamelle 30 weist zwei Schenkel 31, 32 gleicher Länge auf, die in der Schnittkante 33 zusammenlaufen. Die der Schnittkante 33 gegenüberliegenden freien Enden 31a, 32a der Schenkel 31, 32 sind von der Seitenfläche 27 weg ausgerichtet. Wie in Verbindung mit Figur 1 ersichtlich ist, wird durch eine derartige Anordnung der Lamelle 30 erreicht, daß die freien Enden 31a, 32a der Schenkel 31, 32 der V-förmigen Lamellen 30 zur Außenkante 14 des Laufflächenprofils 10 hin ausgerichtet sind. Die Tiefe der V-förmigen Lamelle 30 erstreckt sich im Ausführungsbeispiel gemäß Figur 2 von der Profiloberfläche 26a bis hin zum Profilgrund 26b. Damit entspricht die Tiefe der Lamelle 30 der gesamten Tiefe des Profilblocks 26. Es ist jedoch auch möglich, die Tiefe der V-förmigen Lamellen zu variieren.

Nachfolgend wird nun die Wirkungsweise der V-förmigen Lamellen 30 beschrieben. Dabei sollen die Lamellen 30 wie in Figur 1 dargestellt auf dem Laufflächenprofil 10 ausgerichtet sein. Wie sich aus Figur 2 ergibt, werden die V-förmigen Lamellen 30 hauptsächlich durch Längskräfte L und Querkräfte Q beansprucht, Längskräfte L treten beispielsweise durch Traktion und Bremsvorgänge auf. Querkräfte Q werden beispielsweise bei Kurvenfahrten erzeugt. Wenn die V-förmigen Lamellen 30 durch Längskräfte L beansprucht werden, können sich die Schenkel 31, 32 der Lamelle 30 öffnen. Dadurch wird die Anzahl der Greifkanten erhöht und damit die Traktions- und Bremseigenschaften verbessert. Bei Belastungen durch Querkräfte Q hingegen werden die Lamellen 30 geschlossen, wodurch eine Versteifung des Profilblocks 26 bewirkt wird. Diese Versteifung resultiert aus der Tatsache, daß sich die beiden Teile des Profilblocks 26, die durch die Schenkel 31, 32 der V-förmigen Lamelle 30 voneinander getrennt sind, gegeneinander abstützen können. Das Aneinandervorbeigleiten der einzelnen Blockteile, wie es bei herkömmlichen Lamellen, die linienartig zur Außenkante 14 des Laufflächenprofils 17 hin ausgerichtet sind, auftritt, wird durch die V-förmige Ausgestaltung der Lamelle 30 vermieden. Dadurch ergibt sich im Vergleich zu den herkömmlichen Lamellen durch die V-förmige Ausgestaltung der Lamellen 30 auch bei der Belastung durch Querkräfte Q ein ausreichend steifer Profilblock 26. Dies wirkt sich insbesondere vorteilhaft auf die Handhabungsmöglichkeit und die Fahrstabilität des mit dem Laufflächenprofil 10 versehenen Reifens bei Trockenheit und Nässe und auch bei Schnee aus.

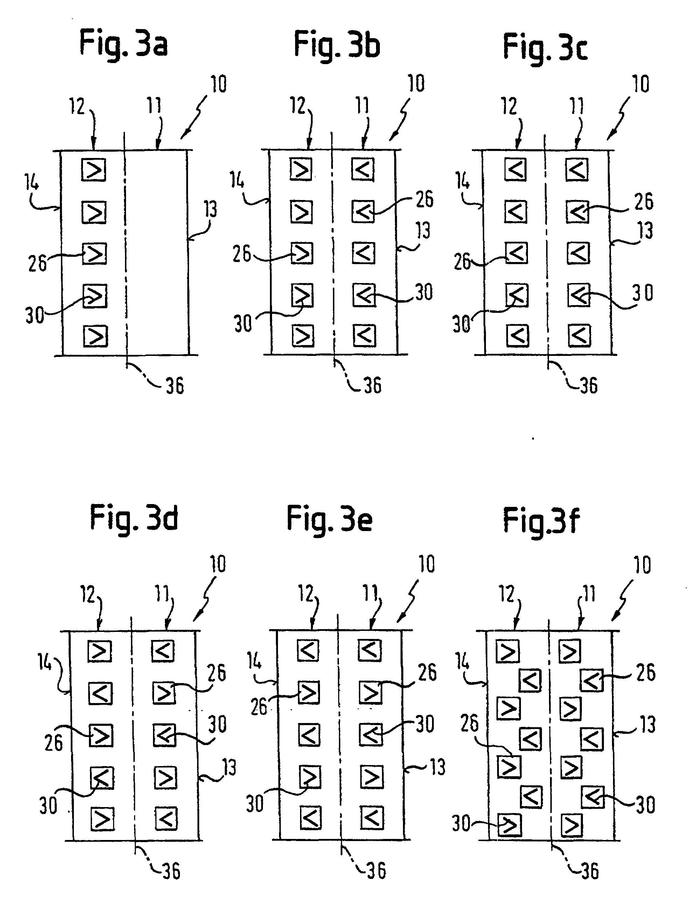

In den Figuren 3a bis 3f sind verschiedene Ausrichtungsvarianten von Profilblöcken 26 auf dem Laufflächenprofil 10 und von Anordnungsvarianten der V-förmigen Lamellen 30 in den Profilblöcken 26 dargestellt. Der besseren Übersicht halber ist die Darstellung stark vereinfacht und nur schematisiert gezeigt. In den der Einfachheit halber viereckig dargestellten Profilblöcken 26 ist jeweils nur eine V-förmige Lamelle 30 dargestellt. Zur besseren Kennzeichnung der Ausrichtung der V-förmigen Lamellen 30 sind diese stark vergrößert gezeigt. Weiterhin ist jeweils nur eine V-förmige Lamelle 30 pro Profilblock 26 dargestellt. Es ist jedoch darauf hinzuweisen, daß in jedem Profilblock 26 mehrere V-förmige Lamellen 30 mit unterschiedlicher Größe und Anordnung vorgesehen sein können.

Die in Figur 3a dargestellte Anordnungsvariante entspricht im wesentlichen der Anordnung gemäß Figur 1. Wie Figur 3a zu entnehmen ist, sind die mit den V-förmigen Lamellen 30 versehenen Profilblöcke 26 auf der Außenschulter 12 des Laufflächenprofils 10 angeordnet. Die Schnittkanten der Schenkel der V-förmigen Lamellen 30 sind zur Mittellinie 36 des Laufflächenprofils 10 hin ausgerichtet.

In Figur 3b sind die mit den V-förmigen Lamellen 30 versehenen Profilblöcke 26 sowohl auf der Außenschulter 12 als auch auf der Innenschulter 11 des Laufflächenprofils 10 angeordnet. Die Ausrichtung der V-förmigen Lamellen 30 auf der Außenschulter 12 entspricht derjenigen aus Figur 3a. Die V-förmigen Lamellen 30 auf der Innenschulter 11 des Laufflächenprofils 10 sind derart ausgerichtet, daß auch ihre Schnittkanten der Schenkel zur Mittellinie 36 des Laufflächenprofils 10 hin ausgerichtet sind. Dadurch ergibt sich eine Anordnung, in der die in bezug auf die Mittellinie 36 gegenüberliegend angeordneten Profilblökke 26 jeweils entgegengesetzt ausgerichtete V-förmige Lamellen 30 aufweisen.

In der Ausführungsform gemäß Figur 3c sind wiederum Profilblöcke 26 mit V-förmigen Lamellen 30 sowohl auf der Innenschulter 11 als auch auf der Außenschulter 12 des Laufflächenprofils 10 angeordnet. Dabei ist die Ausrichtung der V-förmigen Lamellen 30 auf der Außenschulter 12 des Laufflächenprofils 10 derart, daß die freien Enden der Schenkel der V-förmigen Lamellen 30 zur Mittellinie 36 des Laufflächenprofils hin ausgerichtet sind. Die Ausrichtung der V-förmigen Lamellen 30 auf der Innenschulter 11 des Laufflächenprofils 10 entspricht der Ausrichtung der V-förmigen Lamellen 30 auf der Innenschulter 11 gemäß Figur 3b. Durch diese Ausrichtung und Anordnung wird ein Laufflächenprofil geschaffen, bei dem die in bezug auf die Mittellinie 36 gegenüberliegenden Profilblöcke 26 jeweils V-förmige Lamellen 30 aufweisen, die gleichsinnig ausgerichtet sind.

In der Ausführungsform gemäß Figur 3d ist ein Laufflächenprofil 10 dargestellt, bei dem mit V-förmigen Lamellen 30 versehene Profilblöcke 26 sowohl auf der Innenschulter 11 als auch auf der Außenschulter 12 des Laufflächenprofils 10 angeordnet sind. Dabei weisen die auf der Innenschulter 11 bzw. Außenschulter 12 des Laufflächenprofils 10 untereinander benachbart angeordneten Profilblöcke 26 jeweils V-förmige Lamellen 30 auf, die abwechselnd gegensinnig ausgerichtet sind. Gleichzeitig sind auch die in bezug auf die Mittellinie 36 gegenüberliegenden Profilblöcke 26 mit zueinander gegensinnig ausgerichteten V-förmigen Lamellen 30 versehen.

In Figur 3e ist eine Ausführungsform des erfindungsgemäßen Laufflächenprofils 10 dargestellt, das im wesentlichen der Anordnung gemäß Figur 3d entspricht. Der Unterschied in diesem Ausführungsbeispiel zu dem Vorgenannten besteht darin, daß die in bezug auf die Mittellinie 36 gegenüberliegend angeordneten Profilblöcke 26 jeweils V-förmige Lamellen aufweisen, die gleichsinnig zueinander ausgerichtet sind.

In Figur 3f ist schließlich eine Ausführungsform der vorliegenden Erfindung dargestellt, in der die mit V-förmigen Lamellen 30 versehenen Profilblöcke 26 über der gesamten Fläche des Laufflächenprofils 10 verteilt angeordnet sind. Dabei sind in einigen Profilblöcken 26 die freien Enden 31a, 32a der Schenkel 31, 32 der V-förmigen Lamellen zur Mittellinie des Laufflächenprofils 10 hin ausgerichtet. In anderen Profilblöcken 26 hingegen sind die Schnittkanten 33 der Schenkel 31, 32 (siehe Figur 2) der V-förmigen Lamellen 30 zur Mittellinie 36 des Laufflächenprofils 10 hin ausgerichtet. Die Anordnung der Profilblöcke 26 auf dem Laufflächenprofil 10 ist derart, daß die Profilblöcke 26 im von der Mittellinie 36 des Laufflächenprofils 10 gesehenen linken und rechten Bereich jeweils zickzackartig angeordnet sind. Die Aussrichtung der V-förmigen Lamellen im linken und rechten Bereich des Laufflächenprofils ist so gewählt, daß jeweils benachbarte V-förmige Lamellen 30 alternierend gegensinnig ausgerichtet sind. In bezug auf die Mittellinie 36 auf gleicher Höhe liegende Profilblöcke 26 im linken und rechten Bereich des Laufflächenprofils 10 weisen hingegen V-förmige Lamellen 30 mit gleichsinniger Ausrichtung auf. Dadurch entsteht ein Laufflächenprofil 10, bei dem die Ausrichtung benachbarter V-förmiger Lamellen jeweils gegensinnig ist, während die Ausrichtung auf gleicher Höhe liegender Profilblöcke 26 gleichsinnig ist.

Die in den Figuren 3a bis 3f dargestellten Anordnungsmöglichkeiten der mit den erfindungsgemäßen V-förmigen Lamellen 30 versehenen Profilblöcke 26 auf dem Laufflächenprofil 10 sowie die dargestellten Ausrichtungen der Lamellen sind rein exemplarischer Natur und nicht abschließend zu verstehen. Es sind auch andere Anordnungsmöglichkeiten denkbar, bei denen beispielsweise die Profilblöcke regellos auf dem Laufflächenprofil angeordnet sein können, und bei denen auch die Ausrichtung der V-förmigen Lamellen regellos erfolgt. Ferner ist auch jede andere Form von geregelten Mustern der Profilblöcke mit V-förmigen Lamellen sowie der Ausrichtung dieser Lamellen denkbar und fällt somit unter den Schutzbereich der nachfolgenden Patentansprüche.

## Patentansprüche

1. Laufflächenprofil für einen Fahrzeugreifen mit mindestens einer umlaufenden Längsrille (15, 16, 17) und von der Längsrille (15, 16, 17) ausgehenden Querrillen (18, 19, 20, 21) zur Abgrenzung von Profilblöcken (22, 23, 24, 25, 26) und mit in der Lauffläche angeordneten Lamellen (28, 30), die sich in ihrer Tiefenausdehnung von der Profiloberfläche (26a) in Richtung des Profilgrunds (26b) erstrecken, wobei mindestens eine der Lamellen (30), die in wenigstens einem der Profilblöcke (26) angeordnet ist, V-förmig ausgebildet ist, dadurch gekennzeichnet, daß die Schnittkante (33) der Schenkel (31, 32) mindestens einer der V-förmigen Lamellen (30) mit der Seitenfläche (27) des Profilblocks (26) zusammenfällt.

2. Laufflächenprofil nach Anspruch 1, dadurch gekennzeichnet, daß die Schnittkante (33) der Schenkel (31, 32) von wenigstens einer anderen V-förmigen Lamelle (30) über einen Lamellensteg (34) mit der Seitenfläche (27) des Profilblocks (26) in Verbindung steht.

3. Laufflächenprofil nach einem der Ansprüche 1 oder 2, dadurch gekennzeichnet, daß die Schenkel (31, 32) der V-förmigen Lamelle (30) gleiche Länge aufweisen.

4. Laufflächenprofil nach einem der Ansprüche 2 oder 3, dadurch gekennzeichnet, daß die Seitenfläche (27) des Profilblocks (26) im Verbindungsbereich mit dem Lamellensteg (34) eine Einkerbung (35) aufweist.

5. Laufflächenprofil nach einem der vorhergehenden Ansprüche, dadurch gekennzeichnet, daß bei unterschiedlicher Länge der Profilblöcke (26) eine unterschiedliche Anzahl von V-förmigen Lamellen (30) in jedem der Profilblöcke (26) vorgesehen ist.

6. Laufflächenprofil nach einem der vorhergehenden Ansprüche, dadurch gekennzeichnet, daß die Tiefe der Lamellen (30) zwischen ¼ und der gesamten Tiefe des Profilblocks (26) liegt.

7. Laufflächenprofil nach einem der vorhergehenden Ansprüche, dadurch gekennzeichnet, daß der mindestens eine Profilblock (26), der die wenigstens eine V-förmige Lamelle (30) aufweist, an der Außenschulter (12) und/oder der Innenschulter (11) des Laufflächenprofils (10) ausgebildet ist.

8. Laufflächenprofil nach einem der Ansprüche 1 bis 6, dadurch gekennzeichnet, daß mehrere Profilblöcke (26) vorgesehen sind, die jeweils wenigstens eine V-förmige Lamelle (30) aufweisen und daß die Profilblöcke (26) über der gesamten Fläche des Laufflächenprofils (10) verteilt angeordnet sind.

9. Laufflächenprofil nach einem der vorhergehenden Ansprüche, dadurch gekennzeichnet, daß die freien Enden (31a, 32a) der Schenkel (31, 32) der wenigstens einen V-förmigen Lamelle (30) zur Mittellinie (36) des Laufflächenprofils (10) hin ausgerichtet sind.

10. Laufflächenprofil nach einem der Ansprüche 1 bis 8, dadurch gekennzeichnet, daß die Schnittkante (33) der Schenkel (31, 32) von der wenigstens einen V-förmigen Lamelle (30) zur Mittellinie (36) des Laufflächenprofils (10) hin ausgerichtet ist.

11. Laufflächenprofil nach einem der Ansprüche 1 bis 8, dadurch gekennzeichnet, daß mehrere Profilblöcke (26) vorgesehen sind, die jeweils wenigstens eine V-förmige Lamelle (30) aufweisen, daß die freien Enden (31a, 32a) der Schenkel (31, 32) und die Schnittkanten (33) der Schenkel (31, 32) einzelner V-förmiger Lamellen (30) zur Mittellinie (36) des Laufflächenprofils (10) hin ausgerichtet sind und daß die Ausrichtung der V-förmigen Lamellen (30) benachbarter und/oder gegenüberliegender Profilblöcke (26) gleichsinnig und/oder entgegengesetzt und/oder alternierend ist.

12. Verwendung eines Laufflächenprofils gemäß einem der vorhergehenden Ansprüche für einen Winterreifen.

## Claims

1. A tread pattern for a vehicle tire including at least one circumferentially extending longitudinal groove (15, 16, 17) and, emanating from said longitudinal groove (15, 16, 17), transverse grooves (18, 19, 20, 21) for defining blocks (22, 23, 24, 25, 26) in said pattern and sipes (28, 30) arranged in the tread, the sipe depth extending from the pattern face (26a) in the direction of the pattern base (26b), wherein at least one of said sipes (30) disposed in at least one of said blocks (26) is configured V-shaped, characterized in that an intersection (33) of said legs (31, 32) of at least one V-shaped sipe (30) coincides with the side surface area (27) of said block (26).

2. The tread pattern as set forth in claim 1, characterized in that said intersection (33) of said legs (31, 32) of at least one other V-shaped sipe (30) connects said side surface area (27) of said block (26) by a sipe web (34).

3. The tread pattern as set forth in claim 1, characterized in that said legs (31, 32) of said V-shaped sipe (30) have the same length.

4. The tread pattern as set forth in claim 3, characterized in that said side surface area (27) of said block (26) comprises a nick (35) in the portion connecting said sipe web (34).

5. The tread pattern as set forth in any of the preceding claims, characterized in that for a differing length of said blocks (26) a differing number of V-shaped sipes (30) is provided in each of said blocks (26).

6. The tread pattern as set forth in any of the preceding claims, characterized in that the depth of said sipes (30) is between 1/4 and the total depth of said block (26).

7. The tread pattern as set forth in any of the preceding claims, characterized in that at least said one block (26) comprising at least one V-shaped sipe (30) is configured at the outer shoulder (12) and/or inner shoulder (11) of said tread pattern (10).

8. The tread pattern as set forth in any of the claims 1 to 6, characterized in that several blocks (26) are provided, each of which comprises at least one V-shaped sipe (30) and in that said blocks (26) are arranged distributed over the full surface area of said tread pattern (10).

9. The tread pattern as set forth in any of the preceding claims, characterized in that the free ends (31a, 32a) of said legs (31, 32) of at least one V-shaped sipe (30) are oriented in the direction of the center line (36) of said tread pattern (10).

10. The tread pattern as set forth in any of the claims 1 to 8, characterized in that said intersection (33) of said legs (31, 32) of said at least one V-shaped sipe (30) is oriented in the direction of the center line (36) of said tread pattern (10).

11. The tread pattern as set forth in any of the claims 1 to 8, characterized in that several blocks (26) are provided, each of which comprises at least one V-shaped sipe (30), that said free ends (31a, 32a) of said legs (31, 32) and said intersections (33) of said legs (31, 32) of single V-shaped sipes (30) are oriented in the direction of said center line (36) of said tread pattern (10) and that the orientation of said V-shaped sipes (30) of adjacent and/or opposite blocks (26) is unidirectional and/or opposite and/or alternating in direction.

12. Use of a tread pattern as set forth in any of the preceding claims for a winter tire.

## Revendications

1. Profil de bande de roulement pour un pneumatique de véhicule, comportant au moins une rainure longitudinale périphérique (15, 16, 17) et des rainures transversales (18, 19, 20, 21) partant de la rainure longitudinale (15, 16, 17) pour délimiter des blocs de profil (22, 23, 24, 25, 26), et comportant des lamelles (28, 30) agencées dans la bande de roulement qui s'étendent quant à leur extension en profondeur à partir de la surface de profil (26a) en direction du fond de profil (26b), l'une au moins des lamelles (30) agencée dans l'un au moins des blocs de profil (26) étant réalisée en forme de V, caractérisé en ce que l'arête d'intersection (33) des bras (31, 32) de l'une au moins des lamelles (30) en forme de V coïncide avec la surface latérale (27) du bloc de profil (26).

2. Profil de bande de roulement selon la revendication 1, caractérisé en ce que l'arête d'intersection (33) des bras (31, 32) d'au moins une autre lamelle (30) en forme de V est en liaison avec la surface latérale (27) du bloc de profil (26) via une barrette de lamelle (34).

3. Profil de bande de roulement selon l'une ou l'autre des revendications 1 et 2, caractérisé en ce que les bras (31, 32) de la lamelle (30) en forme de V présentent la même longueur.

4. Profil de bande de roulement selon l'une ou l'autre des revendications 2 et 3, caractérisé en ce que la surface latérale (27) du bloc de profil (26) comprend une entaille (35) dans la zone de liaison avec la barrette de lamelle (34).

5. Profil de bande de roulement selon l'une quelconque des revendications précédentes, caractérisé en ce que dans le cas où les blocs de profil (26) ont des longueurs différentes, il est prévu des nombres différents de lamelles (30) en forme de V dans chacun des blocs de profil (26).

6. Profil de bande de roulement selon l'une quelconque des revendications précédentes, caractérisé en ce que la profondeur des lamelles (30) est comprise entre un quart et la totalité de la profondeur du bloc de profil (26).

7. Profil de bande de roulement selon l'une quelconque des revendications précédentes, caractérisé en ce que ledit au moins un bloc de profil (26) qui comprend ladite au moins une lamelle (30) en forme de V est réalisé sur l'épaulement extérieur (12) et/ou sur l'épaulement intérieur (11) du profil de bande de roulement (10).

8. Profil de bande de roulement selon l'une quelconque des revendications 1 à 6, caractérisé en ce qu'il est prévu plusieurs blocs de profil (26) qui comprennent chacun au moins une lamelle (30) en forme de V, et en ce que les blocs de profil (26) sont agencés en répartition sur toute la surface du profil de bande de roulement (10).

9. Profil de bande de roulement selon l'une quelconque des revendications précédentes, caractérisé en ce que les extrémités libres (31a, 32a) des bras (31, 32) de ladite au moins une lamelle (30) en forme de V sont orientées vers la ligne centrale (36) du profil de bande de roulement (10).

10. Profil de bande de roulement selon l'une quelconque des revendications 1 à 8, caractérisé en ce que l'arête d'intersection (33) des bras (31, 32) de ladite au moins une lamelle (30) en forme de V est orientée vers la ligne centrale (36) du profil de bande de roulement (10).

11. Profil de bande de roulement selon l'une quelconque des revendications 1 à 8, caractérisé en ce qu'il est prévu plusieurs blocs de profil (26) qui comprennent chacun au moins une lamelle (30) en forme de V, en ce que les extrémités libres (31a, 32a) des bras (31, 32) et les arêtes d'intersection (33) des bras (31, 32) de lamelles individuelles (30) en forme de V sont orientées vers la ligne centrale (36) du profil de bande de roulement (10), et en ce que les lamelles (30) en forme de V de blocs de profil (26) voisins et/ou opposés sont orientées dans le même sens et/ou en sens opposés et/ou en alternance.

12. Utilisation d'un profil de bande de roulement selon l'une quelconque des revendications précédentes pour un pneumatique d'hiver.
